# EUROPÄISCHE PATENTANMELDUNG

(11) **EP 1 529 606 A1**
(43) Veröffentlichungstag der Anmeldung: **11.05.2005**
(21) Anmeldenummer: 04026115.8
(22) Anmeldetag: 04.11.2004
(51) Int. Cl.: B25J 15/06, B65G 47/91, B65G 61/00

(54) **Verfahren und Vorrichtung zum Ergreifen und Handhaben von Objekten**

(30) Priorität: 08.11.2003 DE 10352279
(71) Anmelder: KUKA Roboter GmbH, 86165 Augsburg (DE)
(72) Erfinder: Schnoor, Bernd, 86316 Friedberg (DE); Wull, Christian, Dr., 82194 Gröbenzell (DE)
(74) Vertreter: Lempert, Jost, Dipl.-Phys. Dr. rer.nat.

(57) **Zusammenfassung**

Ein Verfahren zum Handhaben von Objekten (3,3'), wie Packstücken, mittels eines Handhabungsgeräts, wie eines Mehrachs-Industrieroboters, mit einer Greifeinrichtung (2), zeichnet sich dadurch aus, dass zunächst Koordinaten einer Position, Abmessung und/oder Orientierung einer Anzahl von Objekten (3,3') bestimmt werden und anschließend anhand der Koordinaten einzelne Greifelemente (2.1) der Greifeinrichtung (2) zum Ergreifen der Objekte (3,3') angesteuert werden. Im Zuge des vorstehend genannten Verfahrens kommt erfindungsgemäß eine Greifeinrichtung (2) zum Einsatz, bei der Greifelemente (2.1) einzeln aktivierbar und deaktivierbar sind. Auf diese weise lassen sich Handhabungsvorgänge, beispielsweise Kommisionierprozesse, hinsichtlich der Prozessdauer optimieren.

## Beschreibung

Die Erfindung betrifft ein Verfahren zum Handhaben von Objekten, wie Packstücken, mittels eines Handhabungsgeräts, wie eines Mehrachs-Industrieroboters, mit einer Greifeinrichtung. Weiterhin betrifft die Erfindung eine Greifeinrichtung mit einer Anordnung von Greifelementen zum Handhaben von Objekten, die mittels eines Handhabungsgeräts, wie eines Mehrachs-Industrieroboters, zum Ergreifen der Objekte bewegbar ist.

Verfahren und Vorrichtung der eingangs genannten Art werden heutzutage u.a. für Handhabungsaufgaben in Form von Kommissionierprozessen eingesetzt. Unter "Kommissionieren" versteht man dabei insbesondere das automatisierte Depalettieren von auf bzw. in einem Lagerungsträger, z.B. einer Palette, Kiste, Box oder dergleichen, befindlichen Packstükken und deren Aufladen (Zusammenstellen) auf einen (einem) anderen Ladungsträger. Beispielsweise können links und rechts einer Lagergasse die Ladungsträger, angeordnet sein, während das Handhabungsgerät in der Lagergasse verfahrbar ist. Die Ladungsträger sind in der Regel jeweils mit gleichen Packstücken beladen. Eine solche Beladung wird als "sortenrein" bezeichnet; die Ladungsträger können aber durchaus auch sortenunrein beladen sein, wobei sich verschieden große Packstücke auf bzw. in dem Ladungsträger befinden. Während des Kommissionierprozesses werden in der Regel nur einige wenige Packstücke eines bestimmten Artikels von einem bestimmten Ladungsträger benötigt. Um dabei nicht-produktive (Verfahr-)Zeiten zu verringern, werden Kommissionieraufträge "verdichtet", d.h. zusammengelegt, so dass jeweils mehr als nur ein Packstück von einem Ladungsträger im Hinblick auf einen sogenannten Auftragstapel (Batch) depalettiert wird, sofern dies erforderlich und möglich ist. Auf diese Weise lässt sich der unproduktive Zeitanteil, z.B. das Verfahren von einem Ladungsträger zum anderen, erheblich verringern.

Das Depalettieren von sortenreinen Paletten erfolgt regelmäßig im Einzelgriff, beispielsweise mit sogenannten Saugmattengreifern. Die zum Einsatz kommenden Saugmatten sind an die jeweilige Größe der zu depalettierenden Objekte angepasst, wobei je nach Bedarf zwischen unterschiedlich großen Saugmatten gewechselt werden kann. Nach Maßgabe eines Sensorsystems greift das Handhabungsgerät das jeweilige Objekt nach Möglichkeit zentrisch und legt es definiert an anderer Stelle, z.B. auf einem Bandförderer, ab. Beim Greifen wird dabei die Orientierung der Greifeinrichtung stets einer tatsächlichen Orientierung des Packstücks angepasst. Entsprechende Greifeinrichtungen sind beispielsweise aus der US 5,984,623 und der US 4,789,295 bekannt. Dabei ist insbesondere als nachteilig anzusehen, dass ein Handhaben von Objekten immer nur im Einzelgriff möglich ist und dass bei veränderten Objektabmessungen zusätzliche Prozesszeit durch den erforderlichen Greiferwechsel verloren geht.

Weiterhin sind Saugmatten-Greifsysteme bekannt, die eine Mehrzahl von Saugeinrichtungen aufweisen und bei denen zum Handhaben eines Objekts nicht benötigte Saugeinrichtungen selbsttätig in Abhängigkeit von einem Volumenstrom schließbar sind. Hierbei ist insbesondere als nachteilig anzusehen, dass neben einem zu greifenden Objekt auch weitere Packstücke unbeabsichtigterweise mitgegriffen werden können. Schließlich existieren Greifersystem mit einer Anordnung von Saugelementen, bei denen Untergruppen von Saugelementen mit fest vorgegebener Geometrie aktiv über Ventile ansteuerbar sind. Derartige Systeme besitzen den Nachteil, dass nur eine stark eingeschränkte Objektvielfalt unter bestimmten, genau definierten Randbedingungen greifbar ist.

Der Erfindung liegt die Aufgabe zugrunde, ein Verfahren und eine Vorrichtung der eingangs genannten Art dahingehend weiterzubilden, dass eine Mehrzahl von Objekten unterschiedlicher Abmessung, Position und/oder Orientierung zum Zwecke einer Zeitersparnis flexibel in einem Arbeitsgang handhabbar ist.

Die Aufgabe wird bei einem Verfahren der eingangs genannten Art dadurch gelöst, dass zunächst Koordinaten einer Position, Abmessung und/oder Orientierung einer Anzahl von Objekten bestimmt werden und anschließend anhand der Koordinaten einzelne Greifelemente der Greifeinrichtung zum Ergreifen der Objekte angesteuert werden. Bei einer Greifeinrichtung der eingangs genannten Art ist zur Lösung der Aufgabe vorgesehen, dass die Greifelemente einzeln aktivierbar und deaktivierbar sind.

Aufgrund der erfindungsgemäßen aktiven Ansteuerbarkeit einzelner Saugelemente lässt sich beim Depalettieren von Objekten ein vorteilhafter flexibler Mehrfachgriff realisieren. Zudem erübrigt sich durch die aktive Ansteuerung der Greifelemente aufgrund der dadurch veränderlichen Dimension der Greifeinrichtung selbst bei sehr unterschiedlich großen Objekten ein Greiferwechsel, wodurch nicht-produktive Prozesszeiten eliminiert und die Wirtschaftlichkeit des Gesamtsystems erhöht werden. Im statistischen Mittel kann so im Rahmen der Erfindung die Taktzeit beim Depalettieren eines Packstücks erheblich reduziert werden, wodurch der Warenumsatz pro System entsprechend steigt.

Zweckmäßig ist in Weiterbildung des erfindungsgemäßen Verfahrens vorgesehen, dass in Abhängigkeit von den Koordinaten der Objekte eine Anzahl gemeinsam ergreifbarer Objekte ermittelt wird. Um auch unregelmäßige Orientierungen von Objekten berücksichtigen zu können, sieht eine äußerst bevorzugte Weiterbildung des erfindungsgemäßen Verfahrens vor, dass die Objekte sequentiell ergriffen werden. Zum dennoch regelmäßigem Ablegen der ergriffenen Objekte erfolgt vorzugsweise nach dem Ergreifen eines Objekts eine Umorientierung der Greifeinrichtung. Anschließend können die ergriffenen Objekte sequentiell abgelegt werden. In diesem Zusammenhang sieht eine weitere Ausgestaltung des erfindungsgemäßen Verfahrens vor, dass vor dem Ablegen eines Objekts eine Umorientierung der Greifeinrichtung erfolgt.

Um flexibel auf variable Positionierungen, Abmessungen und Orientierungen der Objekte reagieren zu können, ist im Rahmen einer äußerst bevorzugten Weiterbildung des erfindungsgemäßen Verfahrens vorgesehen, dass die Koordinaten der Objekte mittels einer am Handhabungsgerät und/oder der Greifeinrichtung angeordneten Sensoreinrichtung bestimmt werden. Zusätzlich oder alternativ können die Koordinaten der Objekte auch von einer externen Geometrieeinheit, wie einem CAD-System, vorgeben werden.

Weiterhin können im Zuge einer Weiterbildung des erfindungsgemäßen Verfahrens einzelne Greifelemente, z.B. bei Fehlfunktion, inaktiv geschaltet werden, so dass jederzeit ein sicherer und definierter Zugriff der Greifeinrichtung gewährleistet ist.

Bei einer erfindungsgemäßen Greifeinrichtung sind die Greifelemente vorzugsweise in Form einer zweidimensionalen Matrix angeordnet. Durch die erfindungsgemäße Anordnung der Greifelemente in Matrixform wird in Verbindung mit der Einzelansteuerung der Greifelemente eine hochgradig flexible Anpassbarkeit an unterschiedliche Objektformen und -orientierungen erreicht. Dabei ist vorgesehen, dass zumindest eine Anzahl der Greifelemente als Sauggreifer oder mechanische Greifelemente, wie Hakengreifer oder dergleichen, ausgebildet sind.

Zum Gewährleisten eines allzeit sicheren und definierten Handhabungsvorgangs sind vorzugsweise einzelne Greifelemente deaktivierbar, insbesondere bei Fehlfunktion.

Um die erfindungsgemäße Greifeinrichtung auch bei unregelmäßiger und/oder veränderlicher Objektpositionierung oder -orientierung einsetzen zu können, weist diese in Weiterbildung eine Sensoreinrichtung zum Bestimmen von Positionen, Abmessungen (wie Länge und Breite) und/oder Orientierungen der Objekte auf. Zusätzlich oder alternativ kann auch eine externe Geometrieeinheit zum Vorgeben von Positionen und/oder Orientierungen der Objekte vorhanden sein.

Weitere Eigenschaften und Vorteile der Erfindung ergeben sich aus der nachfolgenden Beschreibung eines Ausführungsbeispiels anhand der Zeichnung. Es zeigt:
- Fig. 1: eine perspektivische Darstellung eines Handhabungsgeräts mit Greifeinrichtung und ergriffenen Objekten;
- Fig. 2: eine Draufsicht auf eine erfindungsgemäße Greifeinrichtung in schematischer Form;
- Fig. 3: eine erfindungsgemäße Greifeinrichtung zum Ergreifen einer Mehrzahl regelmäßig orientierter Objekte;
- Fig. 4: eine erfindungsgemäße Greifeinrichtung beim Ergreifen einer Mehrzahl unregelmäßig orientierter Objekte;
- Fig. 5: eine erfindungsgemäße Greifeinrichtung beim sequentiellen Ablegen von Objekten;
- Fig. 6: eine erfindungsgemäße Greifeinrichtung zum Ergreifen einer Mehrzahl unregelmäßig geformter Objekte;
- Fig. 7: einen Längsschnitt durch ein Greifelement einer erfindungsgemäßen Greifeinrichtung; und
- Fig. 8: ein Ablaufdiagramm des erfindungsgemäßen Verfahrens.

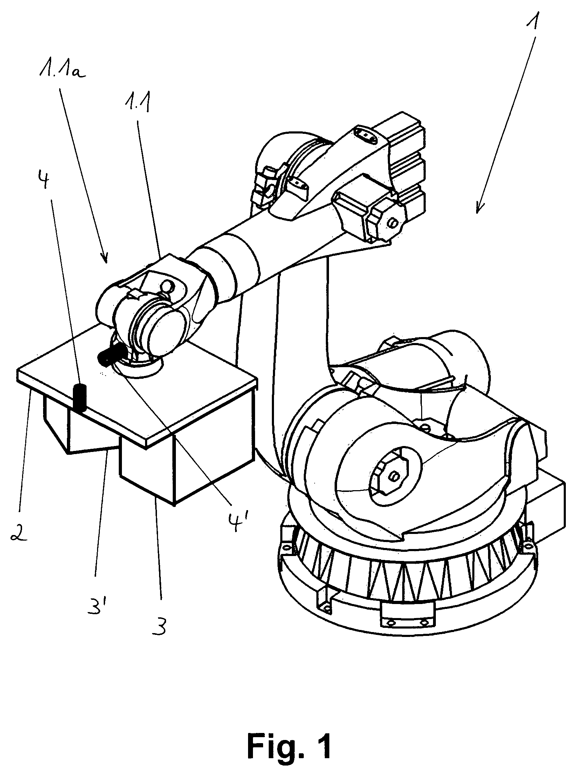

Fig. 1 zeigt in einer schematischen Seitenansicht ein Handhabungsgerät in Form eines Mehrachs-Industrieroboters 1, im Folgenden kurz als Roboter bezeichnet, der an einem distalen Ende 1.1a einer Roboterhand 1.1 eine erfindungsgemäße Greifeinrichtung 2 zum Handhaben von Objekten 3, 3' aufweist, die im Folgenden auch als Packstücke bezeichnet werden. Die Greifeinrichtung 2 weist - wie anhand der nachfolgenden Figuren noch detailliert dargestellt wird - eine Mehrzahl von einzelnen ansteuerbaren Greifelementen auf, deren Einzelansteuerung beispielsweise durch eine Steuerungseinrichtung (nicht gezeigt) des Roboters 1 erfolgt. An der Greifeinrichtung 2 und/oder am Roboter 1 selbst ist weiterhin eine Sensoreinrichtung 4 bzw. 4' angeordnet, z.B. eine Kamera oder dergleichen, mittels derer sich Informationen bezüglich der Objekte 3, 3', wie deren geometrische Abmessungen, bestimmen und vorzugsweise an die Robotersteuerung übermitteln lassen.

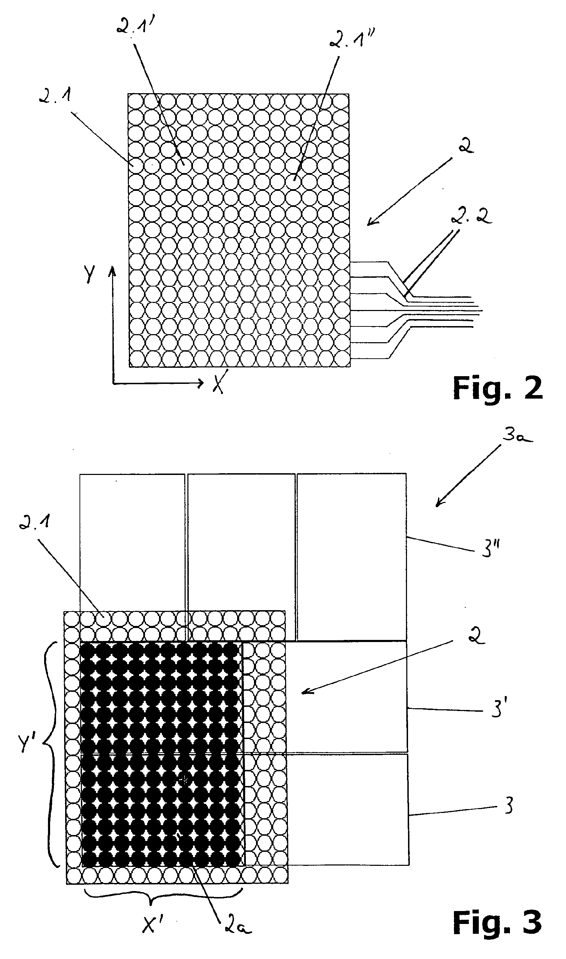

Die Fig. 2 zeigt anhand einer schematischen Draufsicht eine erfindungsgemäße Greifeinrichtung 2, die eine Vielzahl einzelner Greifelemente 2.1 aufweist, die vorteilhafterweise in Form einer zweidimensionalen Matrix angeordnet sind. Dabei weisen die Zeilen der Matrix eine Erstreckung in einer ersten Raumrichtung X auf, während sich die Spalten der Matrix in Richtung einer zweiten Raumrichtung Y erstrecken, die senkrecht zu der ersten Raumrichtung X ist. Bei den Greifelementen 2.1 kann es sich erfindungsgemäß z.B. um Sauggreifer oder um mechanische Greifer, wie Hakengreifer oder dergleichen, handeln.

Die Fig. 3 zeigt den Einsatz der erfindungsgemäßen Greifeinrichtung 2 gemäß der Fig. 2 beim Ergreifen einer Mehrzahl gleichartiger, regelmäig angeordneter Packstücke 3, 3', 3''. Dazu wird eine Auswahl 2a von Greifelementen 2.1 der Greifeinrichtung 2 ausgewählt und aktiv zum Ergreifen der Packstücke angesteuert (schwarze Kreise), während die übrigen Greifelemente 2.1 inaktiv bleiben. Eine Ausdehnung X', Y' der Auswahl 2a entspricht dabei im Wesentlichen einer entsprechenden Ausdehnung der Gesamtheit der zu ergreifenden Packstücke. Die aktive Ansteuerung der Greifelemente 2.1 erfolgt erfindungsgemäß entweder nach Maßgabe entsprechender Sensorinformationen der Sensoreinrichtung 4, 4' oder alternativ anhand von Geometriedaten, die von einer externen Geometrieeinheit, wie einem CAD-System, vorgegeben werden.

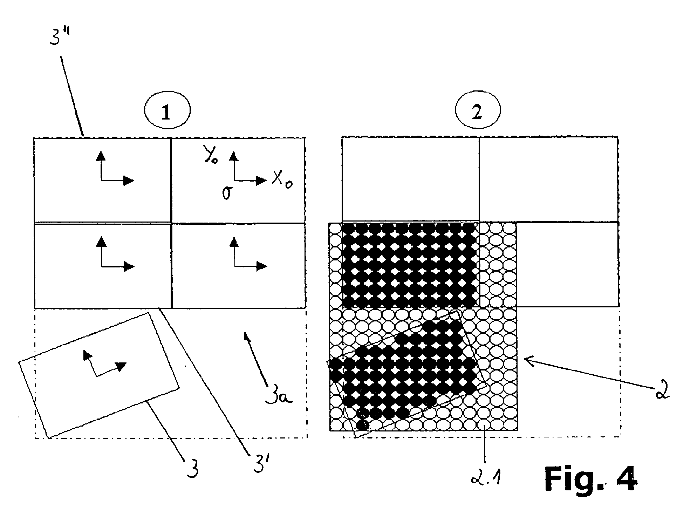

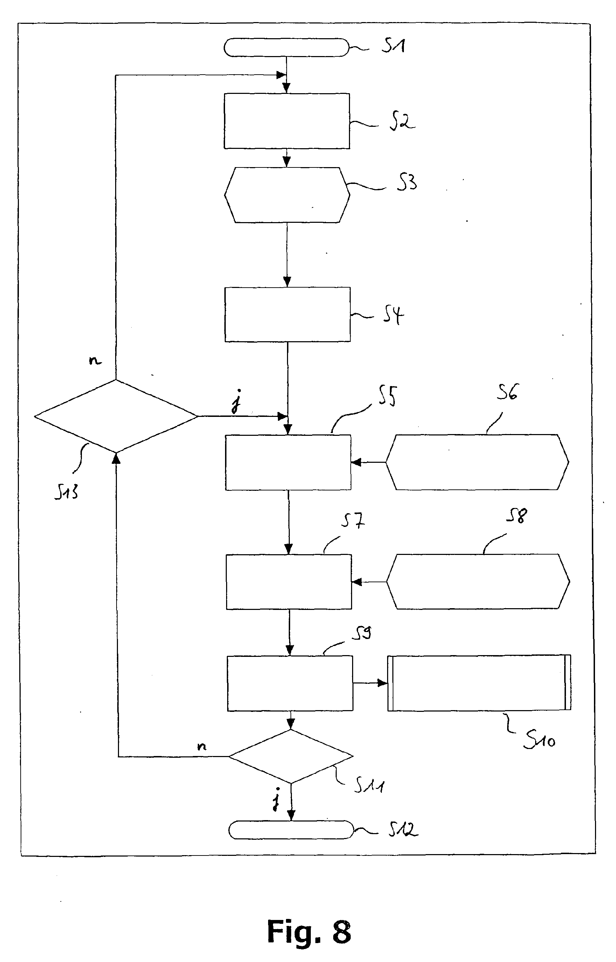

Die Fig. 4 zeigt entsprechend den Einsatz einer erfindungsgemäßen Greifeinrichtung 2 zum gleichzeitigen Ergreifen einer Mehrzahl von Packstücken 3, 3', wenn diese nicht regelmäßig ausgerichtet sind: Zunächst werden bei (1) Positionen, Abmessungen (wie Länge und Breite) und/oder Orientierungen der Packstücke 3, 3', 3" durch die Sensoreinrichtung 4, 4' (Fig. 1) ermittelt. Die Orientierung der Packstücke 3, 3', 3" ergibt sich aus der Lage der Objektachsen X₀, Y₀, die Position der einzelnen Packstücke ist durch die Lage des jeweiligen Achsenursprungs 0 festgelegt. Bei (2) ist dargestellt, wie mit der erfindungsgemäßen Greifeinrichtung 2 und deren einzeln ansteuerbaren Greifelementen 2.1 die beiden Packstücke 3, 3' gleichzeitig im Mehrfachgriff ergriffen und depalettiert werden. Die Ansteuerung der entsprechenden Greifelemente 2.1 erfolgt nach einer Koordinatentransformation auf das Koordinatensystem der Greifeinrichtung 2, wie nachfolgend noch anhand der Fig. 8 erläutert wird.

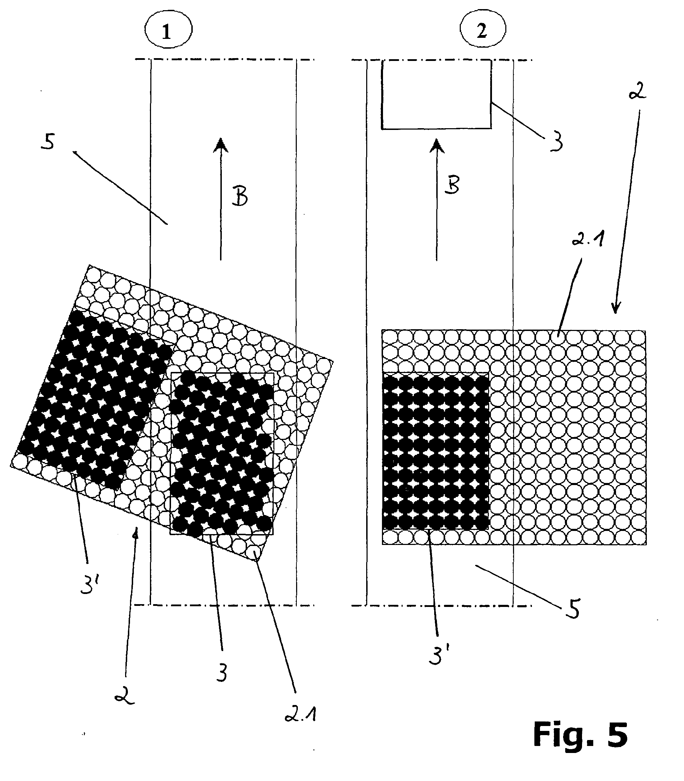

Anhand der Fig. 5 ist gezeigt, wie sich durch den Einsatz der erfindungsgemäßen Greifeinrichtung 2 die Möglichkeit eines sequentiellen und ausgerichteten Ablegens von Objekten 3, 3' ergibt, die gemäß der Fig. 4 in einem unregelmäßigem Mehrfachgriff aufgenommen wurden:

Die Fig. 5 zeigt zu zwei aufeinander folgenden Zeiten (1), (2) ein Fördermittel 5 in Form eines Bandförderers mit Förderrichtung B. Bei (1) wird das erste Packstück 3 in ausgerichteter Form, d.h. mit Orientierung einer seiner Objektachsen X₀, Y₀ in Richtung der Bewegung B des Fördermittels 5 auf diesem abgelegt, indem die entsprechenden Greifelemente 2.1 nach erfolgter Ausrichtung des Objekts 3 inaktiv geschaltet werden. Nach anschließender erfolgter Umorientierung der Greifeinrichtung 2 mittels des Roboters 1 (Fig. 1) erfolgt bei (2) ein Ablegen des zweiten Objekts 3' auf dem Fördermittel 5 in ebenfalls ausgerichteter Form durch Deaktivieren der entsprechenden Greifelemente 2.1. Das in der Fig. 5 dargestellte sequentielle und ausgerichtete Ablegen der Objekte 3, 3' ist möglich, weil über die Sensoreinrichtung 4, 4' (Fig. 1) bzw. die durch eine externe Geometrieeinheit zur Verfügung gestellten (CAD-)Daten eine relative Position und Orientierung der Objekte 3, 3' in Bezug auf die Greifeinrichtung 2 bekannt sind.

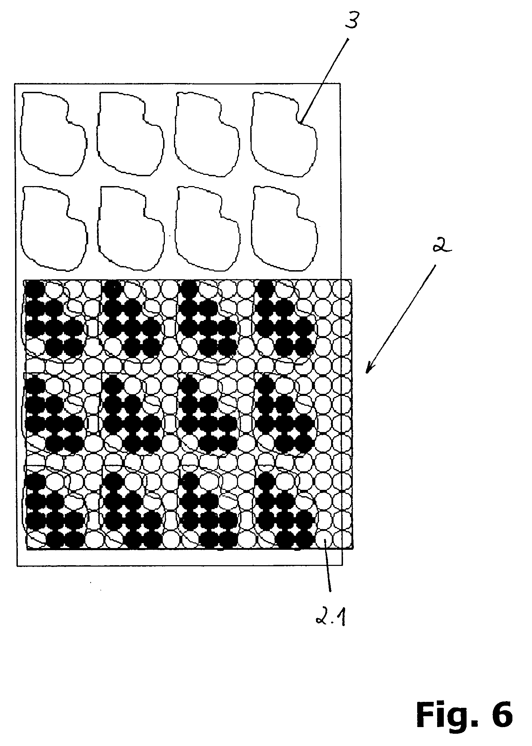

Die Fig. 6 zeigt den Einsatz einer erfindungsgemäßen Greifeinrichtung 2 beim Handhaben von unregelmäßig geformten Objekten, beispielsweise ausgeschnittenen Teilen, wie Blechteile beim Laser- oder Wasserstrahlschneiden sowie Kunststoff-, Papier- oder Holzteile beim Schneiden oder Sägen.

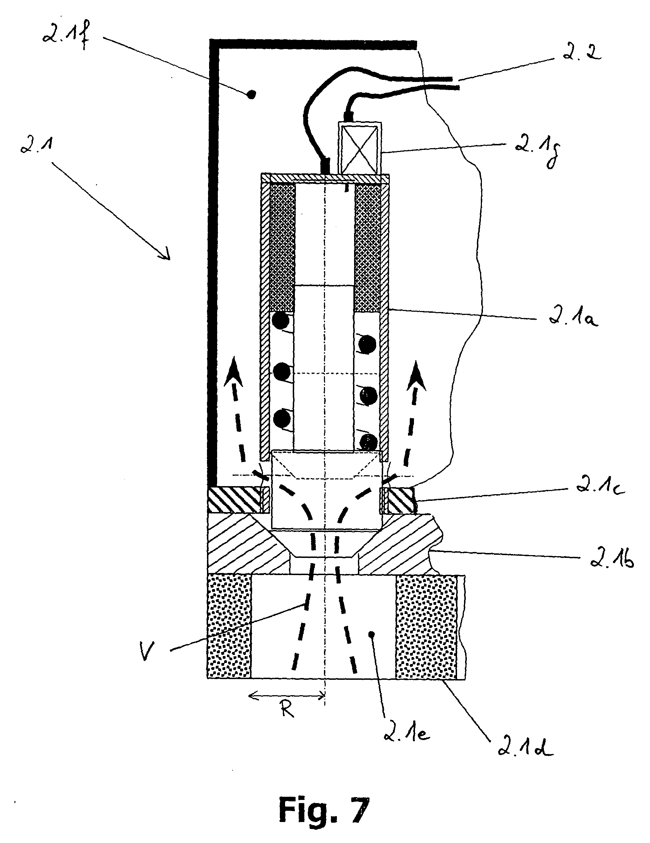

Die Fig. 7 zeigt eine mögliche Ausgestaltung der Greifelemente 2.1 im Längsschnitt. Dabei handelt es sich um die erfindungsgemäß bevorzugte Ausgestaltung der Greifelemente 2.1 als Vakuum-Matrixgreifer (Sauggreifer). In seiner erfindungsgemäß bevorzugten Ausgestaltung gemäß der Fig. 7 weist das Greifelement 2.1 ein Magnetsitzventil 2.1a an sich bekannter Bauart auf, das in eine oberhalb einer Ventilsitzplatte 2.1b angeordnete Halteplatte 2.1c eingeschraubt ist. Unterhalb der Ventilsitzplatte 2.1b ist weiterhin eine Saugmatte 2.1d angeordnet, die unterhalb des Ventils 2.1a einen Durchbruch 2.1e mit Radius R aufweist. Die Saugmatte 2.1d ist erfindungsgemäß vorzugsweise in Kunststoff ausgebildet und weist ein Lochmatrix bzw. ein Wabenmuster auf. Dem zufolge ergibt die Gesamtheit der Durchbrüche 2.1e aller Greifelemente 2.1 das erfindungsgemäße (Loch-)Matrixmuster der Greifeinrichtung 2.

Das Magnetsitzventil 2.1a ist zum Erzeugen eines zum Ergreifen von Objekten notwendigen Unterdrucks innerhalb einer Vakuumkammer 2.1f angeordnet. Im oberen Teil der Fig. 7 sind weiterhin Leitungen 2.2 zum Ansteuern des Ventils 2.1a bzw. eines an diesem vorhandenen Sensors 2.1g zum Anzeigen eines Verschlusszustands des Ventils 2.1a erkennbar.

Das Magnetsitzventil 2.1a und damit das erfindungsgemäße Greifelement 2.1 ist vorzugsweise derart ausgebildet, dass im Falle eines übermäßigen Volumenstroms V durch den Durchbruch 2.1e in die Vakuumkammer 2.1f ein selbsttätiges (passives) Schließen des Ventils 2.1a erfolgt. Dadurch wird ein ungewolltes, fehlerhaftes Aktivieren einzelner Greifelemente 2.1 vermieden, beispielsweise wenn sich diese ganz am Rand eines zu ergreifenden Packstücks befinden und so aufgrund eines Ansaugens von Umgebungsluft zu einem ansteigenden Druck in der Vakuumkammer 2.1f führen, wodurch eine Gesamthaltekraft der Greifeinrichtung 2 herabgesetzt würde. Das in der Fig. 7 beispielhaft gezeigte Ventil 2.1a kann selbstverständlich eine Vielzahl anderer, bekannter Ausgestaltungen annehmen; beispielsweise kann es sich um ein Kugelventil oder dergleichen handeln. In jedem Fall ist jedoch jedes einzelne Ventil 2.1a und damit jedes Greifelemente 2.1 einzeln und unabhängig über die Leitungen 2.2 ansteuerbar.

Die Fig. 8 zeigt detailliert anhand eines Ablaufdiagramms den Ablauf eines erfindungsgemäßen Verfahrens zum Handhaben von Objekten: Nach einem Start des erfindungsgemäßen Verfahrens in Schritt S1 erfolgt zunächst in Schritt S2 ein Übergeben bzw. Erfassen der einzelnen Positionen und Orientierungen aller spezifizierten Einzelobjekte 3-3'' (vergleiche Fig. 3-6) in einem Arbeitsbereich des Handhabungsgeräts 1 bzw. der Greifeinrichtung 2 (Fig. 1; area of interest). Die Koordinaten und Orientierungen können in Schritt S3 unter anderem von einem CAD-System bereitgestellt oder aber auch - ggf. zusätzlich - über die Sensoreinrichtung 4, 4' an der Greifeinrichtung 2 bzw. am Roboter 1 erfasst werden. Bei der Sensoreinrichtung 4, 4' kann es sich insbesondere um ein Bilderkennungssystem, wie eine Kamera, handeln.

Die Koordinaten und Orientierungen, d.h. sechs Freiheitsgrade werden in Schritt S4 mit Hilfe einer geeigneten programmtechnischen Einrichtung (Transformations-Algorithmus) vorzugsweise in der Steuereinrichtung des Roboters 1 auf das Koordinatensystem des Roboters 1 bzw. der Greifeinrichtung 2 transformiert. Dadurch sind später die relevanten Positionen und Orientierungen aller Einzelobjekte 3-3'' in Bezug auf die Greifeinrichtung 2 bekannt. Dies ermöglicht unter anderem das sequentielle und ausgerichtete Aufnehmen bzw. Absetzen von Einzelgegenständen, wie vorstehend anhand der Fig. 5 ausführlich beschrieben.

Eine weitere programmtechnische Einrichtung (Matching-Algorithmus) berechnet anschließend in Schritt S5 eine optimale Anzahl erforderlicher, mittels des Roboters 1 bzw. der Greifeinrichtung 2 durchzuführender Greifzyklen. Dabei handelt es sich bei der genannten optimalen Anzahl in der Regel um eine geringstmögliche Anzahl erforderlicher Greifzyklen. Die Berechnung (Schritt S5) erfolgt unter Einbeziehung (Schritt S6) folgender Parameter:
- Anzahl der zu greifenden Objekte;
- relative räumliche Lage und Orientierung aller Einzelobjekte im Arbeitsbereich; und
- Geometrie der Greifeinrichtung 2 (in der Regel Länge (X) X Breite (Y)) sowie Geometrie eines einzelnen Greifelements 2.1 (z.B. Radius R eines Durchbruchs 2.1e; Fig. 7) und deren geometrische Anordnung als Matrix.

Bei der Berechnung kann auch ein sequentielles und ausgerichtetes Aufnehmen der Objekte berücksichtigt werden, um die Greifeinrichtung 2 optimal auszunutzen und auf diese Weise Greifzyklen einzusparen. Erfindungsgemäß wird jeweils dort, wo sich ein einzelnes Greifelement und ein zu greifendes Objekt überdecken, in der Folge das entsprechende Greifelement betätigt, beispielsweise ein Ventil 2.1a eines Vakuum-Greifelements mit Saugfunktion (Fig. 7).

Die ermittelten Greif- und Ablagepositionen werden anschließend in Manipulatorkoordinaten an eine weitere programmtechnische Einrichtung, den sogenannten Parser, übergeben. Auf der Basis dieser Koordinaten generiert der Parser in Schritt S7 automatisch das Bewegungsprogramm für den Roboter 1. Dabei können in Schritt S8 auch zusätzliche Raumkoordinaten mit in das Bewegungsprogramm des Roboters aufgenommen werden. Diese sogenannten Stützpunkte berücksichtigen die Geometrie der Roboterumgebung, um auf diese Weise Kollisionen des Roboters mit weiteren Gegenständen in seiner Umgebung zu verhindern. Das in Schritt S7/S8 generierte Bewegungsprogramm des Roboters wird anschließend in Schritt S9 durch weitere programmtechnische Einrichtungen des Roboters zum Ausführen des Handhabungsvorgangs durch den Roboter in Schritt S10 verwendet.

Gemäß des Bewegungsprogramms nimmt der Roboter ein Objekt oder mehrere Objekte gleichzeitig oder sequentiell auf und legt diese gleichzeitig bzw. sequentiell ab. Aufgrund der bekannten relativen Position und Orientierung der Objekte bezüglich der Greifeinrichtung kann das Aufnehmen und ggf. auch das Ablegen für jedes einzelne Objekt in einer gewünschten Orientierung, d.h. ausgerichtet erfolgen. Dabei erfolgt das Aufnehmen bzw. Ablegen der Objekte durch Betätigen der einzelnen Greifelemente innerhalb der Greifeinrichtung (Greifer-Matrix), die mit den zu ergreifenden Objekten nach Erreichen der Aufnahmeposition zur erforderlichen Deckung gebracht werden. Wie vorstehend beschrieben, ist insbesondere bei Saugelementen in Vakuumtechnik eine vollständige Überdeckung erwünscht, um einen unzulässigen Druckanstieg im gesamten Greifsystem zu vermeiden. Bei mechanischen Greifelementen mit Reib- oder Kraftschluss ist dabei im Zuge einer alternativen Ausgestaltung der erfindungsgemäßen Greifeinrichtung 2.1 ein seitliches Greifen erforderlich, so dass eine vollständige oder teilweise Dekkung der Greifelemente mit dem Objekt hier sogar unerwünscht sein kann.

Anschließend erfolgt in Schritt S11 die Abfrage, ob nach Ausführen der Aktion in Schritt S10 ein Auftragsende erreicht wurde. Wird diese Anfrage bejaht (j), so endet das erfindungsgemäße Verfahren in Schritt S12. Im Falle einer Verneinung (n) der Abfrage S11 erfolgt in Schritt S13 eine weitere Abfrage dahingehend, ob noch zu ergreifende Objekte im Arbeitsbereich des Roboters bzw. der Greifeinrichtung vorhanden sind. Wird diese Abfrage bejaht (j), so wird das Verfahren mit Schritt S5, wie vorstehend beschrieben, fortgesetzt. Im Falle einer Verneinung (n) der Abfrage S13 wird erneut mit Schritt S2 begonnen.

Zusammengefasst ergibt sich demnach der folgende prozesstechnische Verfahrensablauf: Über eine geeignete Sensorik werden die Positionen und Orientierungen der Packstücke, die sich in der Regel in einer Packlage, d.h. in einer Ebene befinden, erkannt. Alternativ werden diese Daten von einem CAD-System geliefert. Sofern gemäß des Kommissionierauftrags mehr als ein einzelnes Packstück von dem entsprechenden Ladungsträger depalettiert werden soll, wird gemäß der Größe der Greifeinrichtung (Länge x Breite, (X, Y)), der bekannten Abmessungen der Packstücke (Länge x Breite) sowie der detektierten Positionen und Orientierungen innerhalb der Packlage überprüft, ob mehr als ein Packstück mit der Greifeinrichtung abgedeckt werden kann. Im Idealfall werden dabei so viele Packstücke mit dem Greifer abgedeckt, wie insgesamt für den fraglichen Batch depalettiert werden sollen. Die erfindungsgemäß korrelierten Weltkoordinaten von Greifeinrichtung und Packstück lassen anschließend eine entsprechende Ansteuerung der einzelnen Greifelemente (der Ventilmatrix) zu, so dass nur diejenigen Greifelemente aktiviert (Ventile geöffnet) werden, die sich über einem zu greifenden Packstück befinden und für den Greifvorgang voll wirksam werden können.

### Bezugszeichenliste

- 1: Roboter
- 1.1: Roboterhand
- 1.1a: distales Ende
- 2: Greifeinrichtung
- 2a: Greifelementanordnung
- 2.1, 2.1', 2.1": Greifelement
- 2.1a: (Magnetsitz-)Ventil
- 2.1b: Ventilsitzplatte
- 2.1c: Halteplatte
- 2.1d: Saugmatte
- 2.1e: Durchbruch
- 2.1f: Vakuumkammer
- 2.1g: Sensor
- 2.2: Leitung
- 3, 3', 3": Objekt, Packstück
- 3a: Objektanordnung
- 4, 4': Sensoreinrichtung
- 5: Fördermittel
- B: Bewegung
- j: bejahte Abfrage
- n: verneinte Abfrage
- 0: Ursprung
- S1-S13: Verfahrensschritt
- X: Koordinate
- X₀: Objektkoordinate
- Y: Koordinate
- Y₀: Objektkoordinate

## Patentansprüche

1. Verfahren zum Handhaben von Objekten wie Packstücken, mittels eines Handhabungsgeräts, wie eines Mehrachs-Industrieroboters, mit einer Greifeinrichtung, wobei zunächst Koordinaten einer Position, Abmessung und/oder Orientierung einer Anzahl von Objekten bestimmt werden und anschließend anhand der Koordinaten einzelne Greifelemente der Greifeinrichtung zum Ergreifen der Objekte angesteuert werden.

2. Verfahren nach Anspruch 1, **dadurch gekennzeichnet, dass** in Abhängigkeit von den Koordinaten der Objekte eine Anzahl gemeinsam greifbarer Objekte ermittelt wird.

3. Verfahren nach Anspruch 1 oder 2, **dadurch gekennzeichnet, dass** die Objekte sequentiell ergriffen werden.

4. Verfahren nach Anspruch 2, **dadurch gekennzeichnet, dass** nach dem Ergreifen eines Objekts eine Umorientierung der Greifeinrichtung erfolgt.

5. Verfahren nach Anspruch 4, **dadurch gekennzeichnet, dass** die ergriffenen Objekte sequentiell abgelegt werden.

6. Verfahren nach Anspruch 5, **dadurch gekennzeichnet, dass** vor dem Ablegen eines Objekts eine Umorientierung der Greifeinrichtung erfolgt.

7. Verfahren nach einem der Ansprüche 1 bis 6, **dadurch gekennzeichnet, dass** die Koordinaten der Objekte mittels eines am Handhabungsgerät und/oder der Greifeinrichtung angeordneten Sensoreinrichtung bestimmt werden.

8. Verfahren nach einem der Ansprüche 1 bis 7, **dadurch gekennzeichnet, dass** die Koordinaten der Objekte von einer externen Geometrieeinheit vorgegeben werden.

9. Verfahren nach einem der Ansprüche 1 bis 8, **dadurch gekennzeichnet, dass** einzelne Greifelemente inaktiv geschaltet werden.

10. Greifeinrichtung zum Handhaben von Objekten, die mittels eines Handhabungsgeräts, wie eines Mehrachs-Industrieroboters, zum Ergreifen der Objekte bewegbar ist, mit einer Anordnung von Greifelementen, **dadurch gekennzeichnet, dass** die Greifelemente (2.1) einzeln aktivierbar und deaktivierbar sind.

11. Greifeinrichtung nach Anspruch 10, **dadurch gekennzeichnet, dass** die Greifelemente (2.1) in Form einer zweidimensionalen Matrix angeordnet sind.

12. Greifeinrichtung nach Anspruch 10 oder 11, **dadurch gekennzeichnet, dass** zumindest eine Anzahl der Greifelemente (2.1) als Sauggreifer ausgebildet sind.

13. Greifeinrichtung nach einem der Ansprüche 10 bis 12, **dadurch gekennzeichnet, dass** zumindest eine Anzahl der Greifelemente (2.1) als mechanische Greifelemente ausgebildet sind.

14. Greifeinrichtung nach einem der Ansprüche 10 bis 13, **dadurch gekennzeichnet, dass** einzelne Greifelemente (2.1) deaktivierbar sind.

15. Greifeinrichtung nach einem der Ansprüche 10 bis 14, **gekennzeichnet durch** eine Sensoreinrichtung (4, 4') zum Bestimmen von Position (0), Abmessung (X',Y') und/oder Orientierung (X₀, Y₀) der Objekte (3, 3', 3' ' ) .

16. Greifeinrichtung nach einem der Ansprüche 10 bis 15, **gekennzeichnet durch** eine externe Geometrieeinheit zum Vorgeben von Position und/oder Orientierung der Objekte (3, 3', 3'').
